# EUROPÄISCHE PATENTSCHRIFT

(11) **EP 1 206 830 B1**
(45) Veröffentlichungstag und Bekanntmachung des Hinweises auf die Patenterteilung: **23.04.2003**
(21) Anmeldenummer: 00965892.3
(22) Anmeldetag: 24.08.2000
(51) Int. Cl.: H02M 3/335

(54) **SCHALTNETZTEIL MIT EINRICHTUNG ZUR BEGRENZUNG DER AUSGANGSSPANNUNG**
SWITCHED-MODE MAINS SUPPLY UNIT, COMPRISING A DEVICE FOR LIMITING THE OUTPUT VOLTAGE
ALIMENTATION A DECOUPAGE POURVUE D'UN DISPOSITIF LIMITANT LA TENSION DE SORTIE

(30) Priorität: 31.08.1999 DE 19941449
(43) Veröffentlichungstag der Anmeldung: 22.05.2002
(73) Patentinhaber: Braun GmbH, 61476 Kronberg im Taunus (DE)
(72) Erfinder: BERGK, Günther, 65527 Niedernhausen (DE)
(86) Internationale Anmeldenummer: EP0008241
(87) Internationale Veröffentlichungsnummer: WO01017098

(56) Entgegenhaltungen:
- EP-A- 0 255 067
- WO-A-94/06177
- DE-A- 3 438 251
- DE-A- 19 545 680
- US-A- 5 363 287

## Beschreibung

Die Erfindung betrifft ein Schaltnetzteil, insbesondere einen Sperrwandler, mit einer Einrichtung zur Begrenzung der Ausgangsspannung.

Sperrwandler besitzen die Eigenschaft, an ihrem Ausgang eine konstante elektrische Leistung zu liefern. Daher richtet sich die Ausgangsspannung eines Sperrwandlers nach der Größe eines am Ausgang angeschlossenen Lastwiderstands. Ist am Ausgang kein Lastwiderstand angeschlossen, kann die Ausgangsspannung sehr hohe Werte annehmen. Aus der WO 94/06177 ist ein Sperrwandler bekannt, der in ein Steckernetzteil eingebaut ist, und einen Regler zur Überwachung der Ausgangsspannung enthält. Das Verhalten dieses Sperrwandlers wird durch zwei Steuerspannungen beeinflußt, von denen die erste dem Primärstrom proportional ist. Mittels einer Hilfswicklung eines Übertragers werden zwei Spannungen gewonnen, von denen die eine der Ausgangsspannung und die andere der Eingangsspannung proportional ist. Aus diesen beiden Spannungen wird die zweite Steuerspannung abgeleitet. Der Regler ist auf der Sekundärseite des Übertragers vorgesehen, und liefert bei zu großer Ausgangsspannung über einen Optokoppler ein Signal, das die zweite Steuerspannung beeinflußt. Dieser Sperrwandler ist entsprechend aufwendig und teuer.

Als Sicherung gegen zu hohe Spannungen am Ausgang eines Schaltnetzteils dient üblicherweise eine zwischen die Ausgangsklemmen des Schaltnetzteils geschaltete Zenerdiode. Steigt jedoch die Ausgangsspannung aufgrund einer Fehlfunktion des Schaltnetzteils stark an, können Zenerdioden so heiß werden, daß ihre Lötstellen schmelzen, mit der Folge, daß dann die Ausgangsspannung fast beliebig hohe Werte annehmen kann. Zenerdioden bieten daher nicht die Gewähr, daß die Ausgangsspannung zuverlässig unterhalb einer bestimmten zulässigen Maximalspannung bleibt.

Es ist Aufgabe der vorliegenden Erfindung, ein Schaltnetzteil mit einer einfachen Einrichtung zur Begrenzung der Ausgangsspannung anzugeben.

Bei einem erfindungsgemäßen Schaltnetzteil ist als Sicherung gegen zu hohe Ausgangsspannungen zwischen die Ausgangsklemmen eine Schottkydiode in Sperrichtung geschaltet. Übersteigt die Ausgangsspannung die Sperrspannung der Schottkydiode, so wird ihre Halbleiterstruktur innerhalb weniger Millisekunden irreversibel zerstört, und sie besitzt dann in beiden Stromrichtungen einen sehr niedrigen Widerstand, sodaß sie den Ausgang des Schaltnetzteils dauerhaft kurzschließt, ohne dadurch thermisch überlastet zu werden. Beträgt beispielsweise die nominale Ausgangsspannung des Schaltnetzteils 12 Volt, so kann durch eine Schottkydiode mit einer Durchbruchspannung von ca. 25 - 30 Volt dafür gesorgt werden, daß auch im Falle eines Defekts im Schaltnetzteil dessen Ausgangsspannung selbst kurzzeitig nie größer wird als beispielsweise 40 Volt. Die Verwendung einer in Sperrichtung zwischen die Ausgangsklemmen eines Schaltnetzteils geschalteten Schottkydiode gewährleistet daher, daß die Ausgangsspannung zuverlässig unterhalb einer bestimmten Maximalspannung bleibt.

Eine bevorzugte Ausführung eines erfindungsgemäßen Schaltnetzteils weist einen ersten steuerbaren Schalter auf, der in Reihe mit der Primärwicklung eines Übertragers und einem Strommeßwiderstand geschaltet ist. Der Schaltzustand eines zweiten steuerbaren Schalters, der einen Steuereingang des ersten steuerbaren Schalters ansteuert, ist von der Summe dreier Steuerspannungen bestimmt, von denen die erste dem durch den Strommeßwiderstand fließenden Strom, die zweite der Eingangsspannung und die dritte der Ausgangsspannung proportional ist. Die zweite Steuerspannung ist durch einen primärseitigen Spannungsteiler erzeugbar. Die dritte Steuerspannung ist mittels einer Hilfswicklung des Übertragers erzeugbar.

Beim erfindungsgemäßen Schaltnetzteil wird die dritte Steuerspannung auch dem Steuereingang des ersten steuerbaren Schalters zugeführt. Dies hat den Vorteil, daß am Ende des geöffneten Zustands des ersten steuerbaren Schalters an dessen Steuereingang eine für ein schnelles Schließen des ersten steuerbaren Schalters genügend hohe Spannung anliegt.

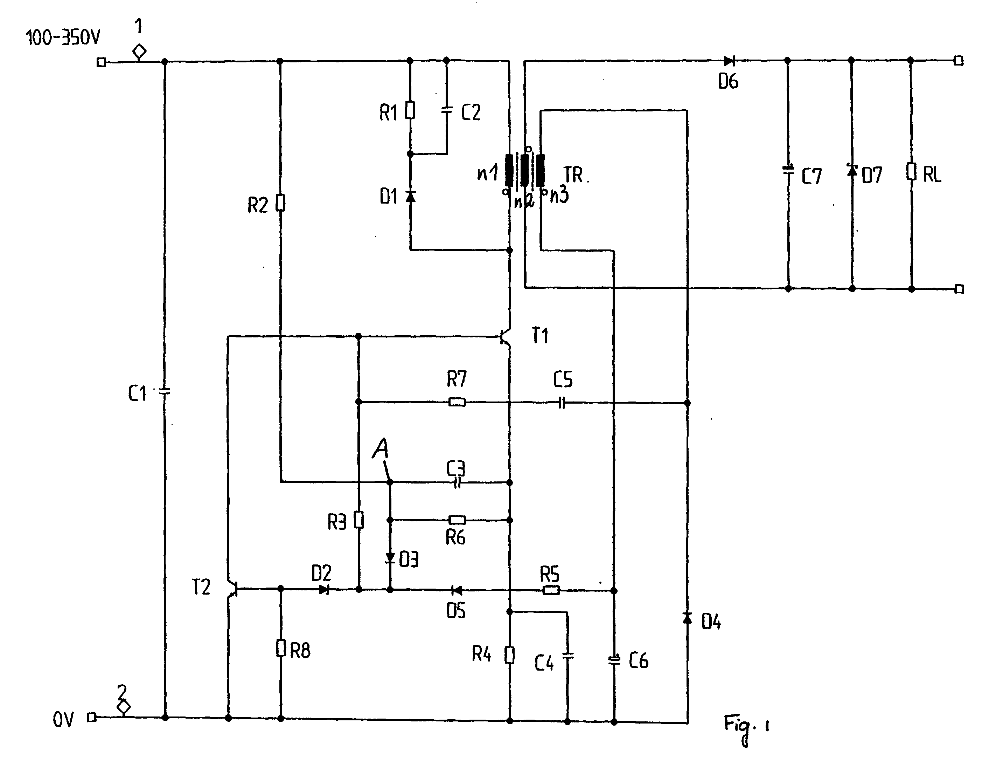

Die Erfindung wird nachstehend anhand eines Ausführungsbeispiels für einen erfindungsgemäßen Sperrwandler erläutert, das in der Zeichnung dargestellt ist. Eine weitere Ausgestaltung ist in der Beschreibung beschrieben.

Der in der Figur dargestellte erfindungsgemäße Sperrwandler enthält einen Übertrager TR, dessen Primärwicklung n1 in Reihe mit der Kollektor-Emitter-Strecke eines ersten Transistors T1 und einem Strommeßwiderstand R4 geschaltet ist, dem ein vierter Kondensator C4 parallelgeschaltet ist. Diese Reihenschaltung ist mit Eingangsklemmen 1, 2 verbunden, über die dem Sperrwandler eine Gleichspannung, insbesondere eine gleichgerichtete Netzspannung von beispielsweise 100 - 350 Volt zuführbar ist. Zwischen den Eingangsklemmen 1, 2 liegt außerdem ein erster Kondensator C1. Zwischen die Eingangsklemmen 1, 2 ist ferner ein Spannungsteiler mit einem zweiten Widerstand R2, einem sechsten Widerstand R6 und dem Strommeßwiderstand R4 geschaltet. Dem sechsten Widerstand R6 ist ein dritter Kondensator C3 parallelgeschaltet. Der Verbindungspunkt A zwischen dem zweiten und sechsten Widerstand ist mit der Anode einer dritten Diode D3 verbunden. Die Basis des ersten Transistors T1 ist mit dem Kollektor eines zweiten Transistors T2 sowie über einen dritten Widerstand R3 mit den Kathoden der dritten Diode D3, einer fünften Diode D5 und einer Zenerdiode D2 verbunden. Die Anode der Zenerdiode D2 ist mit der Basis des zweiten Transistors T2 und über einen achten Widerstand R8 mit Masse, d.h. der Eingangsklemme 2 verbunden. Der Emitter des zweiten Transistors T2 liegt an Masse. Die Anode der fünften Diode D5 ist über einen fünften Widerstand R5 mit dem Pluspol eines sechten Kondensators C6 und dem einen Ende einer Hilfswicklung n3 des Übertragers TR verbunden. Das andere Ende der Hilfswicklung n3 ist mit der Kathode einer vierten Diode D4 sowie über eine Reihenschaltung aus einem fünften Kondensator C5 und einem siebenten Widerstand R7 mit der Basis des ersten Transistors T1 verbunden. Die Anode der vierten Diode D4 ist mit dem Minuspol des sechsten Kondensators C6 und Masse verbunden. Der Kollektor des ersten Transistors T1 ist mit dem einen Ende der Primärwicklung n1 des Übertragers TR und der Anode einer ersten Diode verbunden. Die Eingangsklemme 1 ist mit dem anderen Ende der Primärwicklung n1 des Übertragers TR sowie über einen ersten Widerstand R1 mit der Kathode der ersten Diode D1 verbunden. Dem ersten Widerstand R1 ist ein zweiter Kondensator C2 parallelgeschaltet. Das eine Ende der Sekundärwicklung n2 des Übertragers TR ist mit dem Minuspol eines siebenten Kondensators C7, der Anode einer Schottkydiode D7 und mit der einen Ausgangsklemme des Sperrwandlers verbunden. Das andere Ende der Sekundärwicklung n2 des Übertragers TR ist mit der Anode einer sechsten Diode D6 verbunden, deren Kathode mit der anderen Ausgangsklemme des Sperrwandlers, dem Pluspol des siebenten Kondensators C7 und der Kathode der Schottkydiode D7 verbunden ist. Zwischen den Ausgangsklemmen liegt ein Lastwiderstand RL.

Die in Sperrichtung zwischen die Ausgangsklemmen geschaltete Schottkydiode D7 dient im Fall einer Fehlfunktion oder eines Defekts im Schaltnetzteil als Sicherung gegen zu hohe Ausgangsspannungen, und kann natürlich auch bei anderen als dem im der Figur dargestellten Schaltnetzteil zu diesem Zwecke eingesetzt werden.

Die Funktionsweise des in der Figur dargestellten erfindungsgemäßen Sperrwandlers wird nachstehend beschrieben. Die zwischen den Eingangsklemmen 1, 2 anliegende Gleichspannung gelangt über den zweiten Widerstand R2, die dritte Diode D3 und den dritten Widerstand R3 an die Basis des ersten Transistors T1. Der deswegen durch die Primärwicklung n1 des Übertragers TR fließende Kollektorstrom induziert in der Hilfswicklung n3 des Übertragers TR eine Spannung, die über den fünften Kondensator C5 und den siebenten Widerstand R7 die Basis des ersten Transistors T1 zusätzlich ansteuert, der daraufhin sehr schnell bis zur Sättigung durchschaltet.

Der durch die Primärwicklung n1 des Übertragers TR, die Kollektor-Emitter-Strecke des ersten Transistors T1 und den Strommeßwiderstand R4 fließende Strom erzeugt an diesem eine dem Strom proportionale erste Steuerspannung. Ein Spannungsteiler aus dem zweiten Widerstand R2, dem sechsten Widerstand R6 und dem Strommeßwiderstand R4 erzeugt am sechsten Widerstand R6 eine der Eingangsspannung proportionale zweite Steuerspannung, sodaß am Punkt A eine Spannung herrscht, die der Summe der ersten und zweiten Steuerspannung entspricht. Die Spannung am Punkt A wird über die dritte Diode D3 der Kathode der Zenerdiode D2 zugeführt. Übersteigt die Spannung an der Kathode der Zenerdiode D2 einen durch die Sperrspannung der Zenerdiode D2 und die Basis-Emitter-Spannung des zweiten Transistors T2 bestimmten Schwellwert, so wird der zweite Transistor T2 angesteuert, der daraufhin über seine Kollektor-Emitter-Strecke die Basis des ersten Transistors T1 mit Masse verbindet, sodaß der erste Transistor T1 sperrt. Die in dem Übertrager TR gespeicherte Energie wird jetzt von der Sekundärwicklung n2 über die sechste Diode D6 an den siebenten Kondensator C7 und den Lastwiderstand RL abgegeben. Ferner wird über die Hilfswicklung n3 der sechste Kondensator C6 auf eine der Ausgangsspannung proportionale Spannung aufgeladen. Die beim Abschalten des ersten Transistors T1 an dessen Kollektor entstehenden Spannungsspitzen werden durch die erste Diode D1, den ersten Widerstand R1 und den zweiten Kondensator C2 begrenzt.

Die der Ausgangsspannung proportionale Spannung am sechsten Kondensator C6 wird über den fünften Widerstand R5 und die fünfte Diode D5 der Kathode der Zenerdiode D2 zugeführt. Steigt die Ausgangsspannung infolge einer nur geringen Belastung des Ausgangs an, so steigt auch die Spannung am sechsten Kondensator C6 an, und der für eine Ansteuerung des zweiten Transistors T2 notwendige Spannungsschwellwert wird in der nachfolgenden Flußphase des ersten Transistors T1 schneller, d.h. schon bei einem geringeren Strom durch den Strommeßwiderstand R4 erreicht als bei geringerer Ausgangsspannung. Dadurch verkürzt sich die Dauer der Flußphase des ersten Transistors T1, was dem Anstieg der Ausgangsspannung entgegenwirkt. Auch bei höherer Eingangsspannung wird der Spannungsschwellwert schneller erreicht als bei geringerer Eingangsspannung, d.h. die Dauer der Flußphase des ersten Transistors T1 verkürzt sich, wenn die Eingangsspannung zunimmt. Daher wird die Länge der Flußphase des ersten Transistors T1 von der Summe dreier Steuerspannungen bestimmt: der ersten Steuerspannung, die dem Strom durch den Strommeßwiderstand R4 proportional ist, der zweiten Steuerspannung, die der Eingangsspannung proportional ist, und einer dritten Steuerspannung, die der Ausgangsspannung des Schaltnetzteils proportional ist. Die dritte Diode D3 dient der Entkopplung zwischen der dritten Steuerspannung und der am Punkt A herrschenden Summe der ersten und zweiten Steuerspannung. Die dritte Steuerspannung wird über den dritten Widerstand R3 auch der Basis des ersten Transistors T1 zugeführt, sodaß dieser am Ende seiner Sperrphase wieder schnell einschaltet.

## Patentansprüche

1. Schaltnetzteil, insbesondere Sperrwandler, mit einer Einrichtung zur Begrenzung der Ausgangsspannung, **dadurch gekennzeichnet, daß** zur Begrenzung der Ausgangsspannung an die Ausgangsklemmen des Schaltnetzteils eine Schottky-Diode (D7) in Sperrichtung geschaltet ist.

2. Schaltnetzteil nach Anspruch 1, **dadurch gekennzeichnet,**
**daß** es eine Reihenschaltung aus einer Primärwicklung (n1) eines Übertragers (TR), einer Hauptstromstrecke eines ersten steuerbaren Schalters (T1) und einem Strommeßwiderstand (R4) aufweist, die parallel zu einer Eingangsspannungsquelle geschaltet ist,
und einen zweiten steuerbaren Schalter (T2), dessen Hauptstromstrecke zwischen einem Steuereingang des ersten steuerbaren Schalters (T1) und einem Pol der Eingangsspannungsquelle liegt,
wobei die Leitfähigkeit des zweiten steuerbaren Schalters (T2) von einer an seinem Steuereingang anliegenden Spannung abhängt, die sich aus einer ersten, zweiten
und dritten Steuerspannung zusammensetzt,
wobei die erste Steuerspannung dem Strom durch den Strommeßwiderstand (R4) proportional ist, die zweite Steuerspannung durch einen primärseitigen Spannungsteiler (R2, R6, R4) aus der Eingangsspannung erzeugbar und dieser proportional ist, und die dritte Steuerspannung der Ausgangsspannung des Schaltnetzteils proportional ist.

3. Schaltnetzteil nach Anspruch 2, **dadurch gekennzeichnet,**
**daß** dem Steuereingang des zweiten steuerbaren Schalters (T2) die Summe der drei Steuerspannungen zuführbar ist.

4. Schaltnetzteil nach Anspruch 2 oder 3, **dadurch gekennzeichnet,**
**daß** die dritte Steuerspannung auch dem Steuereingang des ersten steuerbaren Schalters (T1) zuführbar ist.

5. Verwendung einer in Sperrichtung geschalteten Schottky-Diode (D7) als Sicherung gegen zu hohe Spannungen am Ausgang eines Schaltnetzteils insbesondere nach einem der vorhergehenden Ansprüche.

## Claims

1. A switched mode power supply, in particular a flyback converter, with a device for limiting the output voltage, **characterized in that** for limiting the output voltage a Schottky diode (D7) is connected in reverse direction to the output terminals of the switched mode power supply.

2. The switched mode power supply according to claim 1, **characterized in that** it includes a series arrangement comprised of a primary winding (n1) of a transformer (TR), a main current path of a first controllable switching device (T1) and a current measuring resistor (R4), which is in parallel with an input voltage source,
and further includes a second controllable switching device (T2) whose main current path is between a control input of the first controllable switching device (T1) and a pole of the input voltage source,
wherein the conductivity of the second controllable switching device (T2) depends on a voltage residing at its control input, which voltage is composed of a first, second, and third control voltage,
wherein the first control voltage is proportional to the current flowing through the current measuring resistor (R4), the second control voltage is producible from the input voltage by a primary voltage divider (R2, R6, R4) and is proportional to said input voltage, and the third control voltage is proportional to the output voltage of the switched mode power supply.

3. The switched mode power supply according to claim 2, **characterized in that** the sum of the three control voltages is adapted to be conveyed to the control input of the second controllable switching device (T2).

4. The switched mode power supply according to claim 2 or 3, **characterized in that** the third control voltage is also adapted to be conveyed to the control input of the first controllable switching device (T1).

5. The use of a Schottky diode (D7) connected in reverse direction as a safeguard against excessive voltages at the output of a switched mode power supply, in particular according to any one of the preceding claims.

## Revendications

1. Bloc d'alimentation de commutation, en particulier convertisseur à oscillateur bloqué avec un appareil pour la limitation de la tension de sortie, **caractérisé en ce qu'**une diode de Schottky (D7) est branchée dans le sens de blocage pour la limitation de la tension de sortie sur les bornes du bloc d'alimentation de commutation.

2. Bloc d'alimentation de commutation selon la revendication 1, **caractérisé en ce qu'**il présente un montage en série constitué d'un enroulement primaire (n1) d'un transformateur (TR), d'un tronçon de courant principal d'un premier interrupteur (T1) contrôlable et d'une résistance de mesure de courant (R4), qui est branché en parallèle avec une source de tension d'entrée,
et un deuxième interrupteur (T2) contrôlable, dont le tronçon de courant principal se situe entre une entrée de commande du premier interrupteur (T1) contrôlable et un pôle de la source de tension d'entrée,
la conductibilité du second interrupteur (T2) contrôlable dépendant d'une tension appliquée sur son entrée de commande, laquelle comprend une première, une seconde et une troisième tensions de commande,
moyennant quoi la première tension de commande est proportionnelle au courant circulant dans la résistance de mesure de courant (R4), la seconde tension de commande circulant dans un diviseur de tension (R2, R6, R4) coté primaire est générée à partir de la tension d'entrée et est proportionnelle à celle-ci, et la troisième tension de commande est proportionnelle à la tension de sortie du bloc d'alimentation de commutation.

3. Bloc d'alimentation de commutation selon la revendication 2, **caractérisé en ce que** la somme des trois tensions de commande peut être amenée à l'entrée de commande du deuxième interrupteur (T2) contrôlable.

4. Bloc d'alimentation de commutation selon la revendication 2 ou 3, **caractérisé en ce que** la troisième tension de commande peut être amenée également à l'entrée de commande du premier interrupteur (T1) contrôlable.

5. Utilisation d'une diode de Schottky (D7) branchée dans le sens de blocage comme protection contre des tensions trop élevées à la sortie d'un bloc d'alimentation de commutation en particulier selon l'une quelconque des revendications précédentes.
